# EUROPEAN PATENT APPLICATION

(11) **EP 1 304 029 A1**
(43) Date of publication of application: **23.04.2003**
(21) Application number: 01308891.9
(22) Date of filing: 19.10.2001
(51) Int. Cl.: A01K 45/00

(54) **PUFAs in eggs**

(71) Applicant: DSM N.V., 6411 TE Heerlen (NL)
(72) Inventor: The designation of the inventor has not yet been filed
(74) Representative: Wright, Simon Mark

(57) **Abstract**

A process for improving the survival rate (post-hatching) or hatching rate of chicks from an egg is disclosed, where the polyunsaturated fatty acid (PUFA) content of the egg is increased. Such an increase can also improve growth, feed conversion and immunological status of the hatched chicks. Improvements in these parameters have been found even when increasing the PUFA content of the egg by as little as 0.01%. The PUFA is transported across the shell of the egg, by manual injection, and the PUFA can be injected into the egg, into the egg white, or both. Injection can be within 24 hours of the egg being laid. The invention therefore also provides novel eggs, where at least 10% of the arachidonic acid (ARA) inside the eggs is in triglyceride form. The invention also provides eggs that contain one or more PUFAs or lipids in the egg white or where the egg (or yolk) has at least 120 mg of a PUFA such as ARA. These eggs may be intact, with a shell or may be without the shell, and therefore in a raw or cooked form. Such eggs can be included into foodstuffs, such as for humans.

## Description

The present invention relates to a process for improving the survival rate (post-hatching), hatching rate, growth, feed conversion and/or immunological status of chicks from an egg. This can be achieved by increasing the polyunsaturated fatty acid (PUFA) content of the egg. The invention also extends to novel eggs (both contained by the shell, and in an unshelled form) that have at least 10% of arachidonic acid (ARA) in the triglyceride form. The egg (or egg white) may contain at least one PUFA, such as at least 0.01%, and/or the egg (or egg yolk) may contain at least 120 mg of a PUFA, such as ARA.

The invention finds use in not only improving the survival and hatching rate of chicks, but also providing novel foods. The novel eggs of the invention can be used in human foodstuffs.

Poly unsaturated fatty acids (PUFAs) are known oily compounds that can be obtained from natural sources, such as vegetable oils and marine oils (such as tuna oil). They can also be produced by microorganisms, in particular fungi of the genus *Mortierella*. Certain PUFAs, such as ARA and DHA, are known to be beneficial to babies and infants, and are incorporated into infant formula.

It is known to supplement animal feed with various PUFAs, in particular to supplement chicken feed with ARA. The increased ARA in the diet results in a higher amount of ARA in the eggs. This has been until recently thought beneficial because the ARA is then in a phospholipid, rather than triglyceride, form. However, the amount of ARA in the egg is variable and can vary significantly from egg to egg, as this depends on the age of the chicken, its exact diet, and the breed of hen. This is therefore an inexact way of incorporating ARA into eggs, and because there are so many factors that influence the amount of ARA in an egg, the ARA content varies, which is undesirable especially if the egg is to be fed to humans.

### BACKGROUND OF THE INVENTION

For a domestic chicken, an average 60 gram egg has about 5 to 6 grams of lipid in the yolk. The yolk lipid contains energy and essential components, mostly PUFAs for the chick. There are three major lipid components: triacylglycerol (63%), phospholipid (30%) and cholesterol (6%). For many PUFAs, such as ARA, they are principally present in the phospholipid, rather than triglyceride, form.

Various workers in the field have studied the content of eggs, in particular the yolk, and their fatty acid content, either during incubation or as a result of feeding the hens different diets. For example, it has been found that the content of ARA in yolk can vary considerably depending on the age of the hen, the fat source in feed and the developmental stage of the egg (LaTour *et al*, Poultry Science, 77:47-53, (1998)), It has also been disclosed that chickens fed on special diets can influence the levels of ARA, DHA and linoleic acid in the yolk, the authors finding that with special diets the amounts of DHA increased, but in the regularly fed chicken the level of ARA was actually significantly higher than those fed a special diet (Gao and Charter, Poultry Science 79 - 921-924 (2000)). A study has also been made to the change in fatty acid profile according to the age of the egg during incubation (Ding *et al*, Poultry Science, 76:823-833 (1997)). An additional study, using a diet enriched with 4% fish oil, investigated the relationship of PUFAs in the diet and their deposition into the eggs fat, and their effect on hens laying performance (Baucells *et al*, Poultry Science 79:51-59 (2000)).

WO-A-91/07498 (Phycotech) refers to the production of omega-3 highly unsaturated fatty acids, such as EPA, from *Thraustochytriales* microorganisms. The or microorganism can be included into food for hens. This increases the amount of omega-3 PUFAs in the eggs, but the fatty acid only appears in eggs via the animal (e.g. hen) and is in a phospholipid, rather than triglyceride, form.

Although the PUFA content of the eggs has been studied, none of these documents refer to the effect of PUFAs on the egg itself, in particular the hatching rate or the survival rate (of the post-hatched chicks). In addition, due to the large variation in PUFA content in the eggs, due to a significant number of different factors, there is a need to be able to produce eggs that are more consistent (or less varied) in their PUFA content. There exists therefore a need to be able to produce eggs where the PUFA content can be accurately predetermined, and executed or which method results in considerably less variance in egg PUFA content.

### DESCRIPTION OF THE INVENTION

The present invention is based on the finding that by adding a PUFA to the egg, one can improve the survival rate, or hatching rate or other performance factors of the chicks by incorporating a PUFA into the egg. This can be achieved by adding the PUFA through the shell, such as by injection. As a result, eggs having novel characteristics (such as an increased amount of PUFA or a PUFA in triglyceride form) have been prepared. By using this method, a predetermined amount of PUFA can be incorporated into the egg, and this can minimise any risks associated with variations in egg PUFA content (which is a disadvantage of prior art methods).

A first aspect of the present invention therefore relates to a process for improving (or increasing) the survival (or mortality) rate (such as post-hatching), hatching rate, growth, feed conversion and/or immunological status of a chick (from an egg). The process comprises increasing the PUFA content of the egg.

A second aspect of the invention relates to increasing the PUFA content of an egg, the process comprising adding the PUFA to an egg or supplementing an egg with a PUFA. The egg may still have its shell, that is to say it is intact, with the yolk and egg white still inside the shell. However in some embodiments, the shell can be removed, and the egg may exist in an unshelled form, that is to say with a yolk and egg white.

A third aspect of the invention relates to an egg comprising a yolk and an egg white, the egg having one or more of the following characteristics:
(a) the yolk contains arachidonic acid (ARA) where at least 10% of the ARA is in the triglyceride form (or less than 90% of the ARA is in the phospholipid form);
(b) the egg white comprises a (e.g. phospho) lipid or a PUFA, for example at least 0.01% of a lipid or a PUFA;
(c) the egg or egg yolk has had added at least 10mg of a PUFA, such as ARA, per egg;
(d) the egg or egg yolk has at least 15 or 20g of a PUFA, such as ARA, per kg of dry matter of yolk;
(e) the egg has a PUFA content of at least 12% (based on the total weight of the egg or on the total amount of fatty acids, e.g. fatty acids with more than 20 carbon atoms);
(f) the egg or egg yolk has an ARA content of at least 2.5% (based on the total weight of lipids in either the egg or egg yolk);
(g) the egg or yolk has at least 10mg of ARA in the triglyceride form; and/or
(h) the egg has a break or hole in the shell through which a PUFA has been added to the egg.

### IMPROVED SURVIVAL AND HATCHING RATES

It has been surprisingly found that even small increases in the PUFA content of the egg can have a positive effect on survival or health parameters. These include the survival rate of the chicks after hatching, the hatching rate (of the chicks from the eggs) as well as growth of the chicks after they have hatched. The survival rate 10, 20 or 30mg of a PUFA, such as less than 70, 60 or 50mg of a PUFA (e.g. 10-50mg) or at least can be thought of as being opposite to the mortality rate. In other words, if the survivial rate is x% then the mortality rate will be (100-x)%. This survival or mortality rate is preferably measured after 2, 5, 10, 20 or 40 days. Preferably the mortality rate is less than 3.6%, 3.4%, 3.2% or even 3.0%.

The hatching rate may also be measured as a percentage, such as the number of eggs that hatch divided by the total number of (incubated eggs (multiplied by 100). The rate may be at least 80%, 81%, 82% or even 85%. It may be less than 95%, 92% or 90%.

The PUFA can also improve the feed conversion (the ability of the chick to absorb essential nutrients) from the diet and/or the immunological state of the chick, again post-hatching. Preferably the feed conversion ratio (FCR) is less than 1.72, 1.70, such as less than 1.69, 1.68 or 1.67.

Even an increase of the PUFA content of the egg of 0.01% has been found to have a positive effect on at least one of these parameters. Thus, preferably in this process the amount of PUFA in the egg is increased by at least 0.01%, such as 0.05%. More preferably, the increase in PUFA content of the egg is at least 0.1%, such as at least 0.2%, preferably at 0.3%. This increase in PUFA content may be in the (whole) egg itself (including the egg white and the egg yolk), or in the egg white or egg yolk, individually. All percentages refer to (e.g. an increase in) weight, unless the context requires otherwise.

In order to improve the immunological status one may balance, or improve the balance or ratio, between the number of helper Th1 and Th2 cells. For example, the addition of the PUFA may increase the number of Th1 or Th2 cells, whichever is in the minority. One PUFA may increase the amount of Th1 cells, while another may increase the amount of Th2 cells. The PUFA may therefore improve the ratio of Th1:Th2 (e.g. to bring it nearer to 1:1).

The present invention also provides ways of increasing the PUFA content in either the egg yolk but not in the egg white or vice versa. In this aspect of the invention, the egg retains its shell, that is to say it is intact. The egg can be from a hen, such a breeder (broiler) hen. Eggs therefore include those of chickens, ostriches, ducks and turkeys, as well as other poultry eggs.

### INCREASING THE PUFA CONTENT OF THE EGG

This may be achieved by adding a PUFA to an egg, or by supplementing an egg with a PUFA. For the first aspect of the invention, the egg will retain its shell. However, it has been found to be beneficial to add a PUFA to an egg and therefore the second aspect is not limited to shelled eggs but also unshelled eggs comprising an egg yolk and egg white.

The process may comprise transporting a PUFA across the shell of an egg. This may be achieved with little or minor breakage of the shell One may form an aperture, break, perforation or incision in the shell. If the shell is broken, it is preferable that this is only a (small) break, such as a (small) crack or hole and does not adversely affect the egg yolk or egg (or the chick to be) inside. It therefore includes making a small hole in the shell, through which the PUFA can be added or transported.

The PUFA is preferably transported, or added to the egg, by injection. The transportation may therefore be via a needle. Various sizes of needles can be used, depending on the condition of the shell, and where the PUFA is to be located. By using a longer or shorter needle, the PUFA can be injected into the egg white or the egg yolk, or both.

By using a thin needle, the shell can be penetrated, virtually without breakage. Larger needles (for greater delivery amounts or volumes) can be used, provided that a small hole in the egg can be tolerated. Preferably the egg is broken or a (small) hole is made in the shell, for example at the bottom of the egg or in the shell adjacent to the airspace (inside the egg). The needle can be from 0.5 to 6, such as from 1 to 5, preferably from 2 to 4 cm. long. The needle can be of an appropriate size given the type and size of the egg, such as of 18 or 20 gauge.

Preferably the volume injected into the egg is from 0.01 to 1.0ml, such as from 0.05 to 0.5, optimally from 0.08 to 0.15ml.

Injection can be into the egg yolk, or into the egg white, or into both. The injection may be manual (i.e. by human hand), or mechanical (that is to say completed or controlled by a machine) or automated. If using a mechanical system, then a commercially available egg injection system can be employed, for example one manufactured by Embrex, Inc, Research Triangle Park, North Carolina, USA. Egg injection systems are available under the trademark INOVOJECT™. Such systems can allow accurate dosage to the eggs, and can inject the PUFA into different size eggs, and can inject eggs at a significantly faster rate than it is possible manually. Preferably, each needle is individually sanitized after each injection. This may minimise contamination. Such egg injection systems can inject the PUFA at up to 5,000 eggs per hour.

Injection preferably takes place within 24 hours of the egg being laid, that is to say at day zero. At this stage the egg is preferably less than 24 hours old.Injection can take place at any time up to hatching, but the beneficial effects may be more effective the earlier the PUFA is injected.

As will be realised, the hatching times for eggs of different species varies. Thus, for example, for chickens the eggs hatch at approximately 21 days. However, this time is different for duck and turkey eggs. Preferably, therefore, the PUFA is added (injected) at least 1, 2, 3, 5, 10, 15 or 21 days prior to hatching.

### NOVEL EGGS

The invention relates to eggs (both shelled and unshelled) which have had their PUFA content (either in the egg yolk or egg white, or both) increased by injection.

The egg, or egg yolk, may be such that at least 10% of the ARA that is present is in the triglyceride form. Preferably, the amount of ARA that is in the triglyceride form is at least 20%, 30% or 40%. The amount of ARA in phospholipid form is preferably less than 70%, 60% or 50%.

The egg or egg white may contain one or more PUFAs. In experiments conducted by the applicant, only trace amounts of lipids were found in the egg white of normal eggs. The invention therefore provides egg white containing one or more PUFAs and/ or one or more lipids. Preferably, the amount of the PUFA(s) and/or amount of lipid(s) is at least 0.01%, for example 0.05%. However, amounts of at least 0.1, 0.2 or 0.3% are envisaged. There may be a maximum amount of the PUFA(s) and/or lipid(s), and this may be less than 5%, such as less than 2%, more preferably less than 1% and optimally less than 0.5%.

The egg (as a whole) or egg yolk may contain, or have had added, at least 10, 20, 30 or 50mg of PUFA, such as less than 70, 60 or 50mg (e.g. 10-50mg), or at least 110 or 120 mg of a PUFA, such as ARA, for example at least 130 or 135 mg, in particular for a chicken egg (e.g. an egg of the family Galli). The total amount of PUFA may be less than 200, 180 or 150mg.

The egg (as a whole) or egg yolk may contain at least 17g of a PUFA (such as ARA) per kg of dry matter of yolk. This may be at least 20, 25, 30 or 40g PUFA per kg of dry matter of yolk. This unit is employed in the Examples later. As a rule, however, it is not a unit used in the prior art. However, it is nevertheless easily determined, because one can calculate the ARA content using routine methods, as discussed above, similarly one can calculate the dry weight of yolk by using known methods. Preferably, using these units, the ARA content is at least 20g, 25g, 30g or 35g (of kg of dried weight of yolk). However, the maximum may be no more than 50, 40 or 30g (per kg of dried weight of yolk).

The egg may have a PUFA (change approach to LC-PUFA, see earlier) content of at least 12%, this percentage being (in weight) based on the total fatty acids . The PUFA content may be at least 15, 18 or 20%. However, the PUFA content of the egg is preferably less than 40%, 35% or optimally 30%.

The egg or egg yolk may have an ARA content of at least 2.5%. This percentage (also by weight) is based on the total weight of fatty acids in either the egg, or the egg yolk, as the case may be. These percentages can easily be obtained by determining the total weight of fatty acids (lipids) present either in the egg or egg yolk. This can employ a standard of methodology, for example FAME, using the fatty acid methyl ester technique. Preferably, the ARA content is at least 3%, 4%, 5% and may be as high as at least 6 or 7%. However, preferably the ARA content is less than 15%, less than 13%, such as less than 10%.

The egg or egg yolk may have at least 10mg of ARA in the triglyceride form. Preferably this amount is at least 12mg, 15mg, 20mg, such as at least 25mg, 35mg or 50mg (of ARA in the triglyceride form). However, preferably the egg or egg yolk will have no more than 50, 40 or 30mg of ARA in the triglyceride form.

The amounts above apply preferably, but not exclusively, to chicken eggs (e.g. egg of family *Galli*). An average chicken agg may weigh 60 or 70g. Hence the amounts can be multiplied according to the weight of the egg *pro rata*. For example, an ostrich egg may weigh about 1.5kg, so the amounts can be multiplied by, say, a factor of 20.

For the above characteristics, the egg may retain its shell, that is to say it is a shelled or intact egg. However, unshelled eggs are also contemplated, for example an egg consisting of a yolk and egg white. This may be in a natural or raw, such as uncooked, form. However, the egg (including the egg white and yolk) may be in a cooked form, such as poached, fried, or scrambled (in the latter case the above features must be averaged over both the yolk and egg white). Such eggs may be incorporated into foodstuffs, for example in an uncooked form (such as mayonnaise) or in a cooked form. The invention therefore extends to foodstuffs or animal feed, in particular human foodstuffs comprising such eggs.

### Polyunsaturated Fatty Acids (PUFAs)

The PUFA can either be a single PUFA or two or more different PUFAs. If there are 2 or more PUFAs then either each PUFA or the total amount of all the PUFAs is within the amounts specified .

The or each PUFA can be of the n-3 or n-6 family. Preferably it is a C18, C20 or C22 PUFA. It may be a PUFA with at least 18 carbon atoms and 3 double bonds. When dealing with amounts of a PUFA in an egg (or a part thereof), the value may be based on the (total) amount of PUFAs present. In this context the PUFAs present may be C18-C22 PUFAs or C20 and above PUFAs.

The PUFA(s) can be provided in the form of a free fatty acid, a salt, as a fatty acid ester (e.g. methyl or ethyl ester), as a phospholipid and/or in the form of a mono-, di- or triglyceride.
Suitable (n-3 and n-6) PUFAs include:
docosahexaenoic acid (DHA, 22:6 Ω3), suitably from algae or fungi, such as the (dinoflagellate) *Crypthecodinium* or the (fungus) *Thraustochytrium*;
γ-linolenic acid (GLA, 18:3 Ω6);
α-linolenic acid (ALA, 18:3 Ω3);
conjugated linoleic acid (octadecadienoic acid ,CLA);
dihomo-γ-linolenic acid (DGLA, 20:3 Ω6);
arachidonic acid (ARA, 20:4 Ω6); and
eicosapentaenoic acid (EPA, 20:5 Ω3).

Preferred PUFAs include arachidonic acid (ARA), docosohexaenoic acid (DHA), eicosapentaenoic acid (EPA) and/or γ?-linoleic acid (GLA). In particular, ARA is preferred.

More than one PUFA may be added, for example two, three or more PUFAs may be added. If there are more than two PUFAs, preferably at least one of them is an Ω3 or Ω6 PUFA. The relative amounts of the PUFAs can then be expressed as a ratio. For example, the ratio of Ω6 (such as ARA):Ω3 (such as DHA or EPA) may be from 1:5 to 5:1, preferably from 2:1 to 1:3, optimally from 1:1 to 1:2. Preferably the Ω6 is ARA, and the Ω3 PUFA is DHA. If EPA is present, then preferably it is present at a level that is less than 1/5^{th}, such as less than 1/10^{th} of the amount of ARA.

The PUFAs may be from a natural (e.g. vegetable, animal or marine) source, synthetic or may be derived from a single cell or microbial source. Thus the PUFA may be of (or from) microbial, algal or plant origin (or source). In particular, the PUFA may be produced by a bacteria, fungus or yeast. Fungi are preferred, preferably of the order *Mucorales,* for example *Mortierella, Phycomyces, Blakeslea, Aspergillus, Thraustochytrium, Pythium* or *Entomophthora*. The preferred source of ARA is from *Mortierella alpina, Blakeslea trispora, Aspergillus terreus* or *Pythium insidiosum*. Algae can be dinoflagellate and/or include *Porphyridium, Nitszchia*, or *Crypthecodinium* (e.g. *Crypthecodinium cohnii)*. Yeasts include those of the genus *Pichia* or *Saccharomyces*, such as *Pichia ciferii*. Bacteria can be of the genus *Propionibacterium.*

The PUFA(s) may be present in or be added to the composition as an (e.g. edible) oil. The oil may be a liquid (at room temperature). The oil may be a microbial (e.g. single cell), oil. A suitable oil that includes ARA is available from DSM N.V., Wateringseweg 1, P.O. Box 1, 2600 MA Delft, The Netherlands, under the trade mark VEVODAR™. Another commercially available (ARA) oil is ARASCO™ from Martek Corporation, 6480 Dobbin Road, Columbia, MD 21045, United States of America. Other PUFAs are available, for example DHA as a DHA oil (DHASCO™ from Martek Corporation or DHA from Pronova, Norway, under the trade mark EPAX™).

Vegetable oils include blackcurrant, borage and primrose oils, and often contain an Ω6 PUFA, e.g. GLA. They also include olive, sunflower and soy bean, soy flower oils, for example cooking and/or salad oils.

A number of documents describe the production of crude PUFA oils. Microbial oils containing ARA are disclosed in WO-A-92/13086 (Martek), EPA in WO-A-91/14427 (Martek) and DHA in WO-A-91/11918 (Martek). Various methods for extracting PUFA oils from microbial sources can be found in WO-A-97/36996 and WO-A-97/37032 (both Gist-Brocades). Preparation of ARA, DHA and EPA-containing oils is also described in WO-A-92/12711 (Martek).

In the oil, it is preferred that most of the PUFA(s) is/are in the form of triglycerides. Thus, preferably at least 50%, such as at least 60%, or more preferably at least 70%, of the PUFA(s) is in triglyceride form. However, the amount of triglycerides may be higher, such as at least 85%, preferably at least 90%, more preferably at least 95% or 98% of the oil. Of these triglycerides, preferably at least 40%, such as at least 50%, and more preferably at least 60% of the PUFA is present at the α?-position of the glycerol (present in the triglyceride backbone), also known at the 1 or 3 position. It is preferred that at least 20%, such as at least 30%, more preferably at least 40% of the PUFA(s) is at the β(2) position.

The microbial oil may be a crude or refined oil. It may have been extracted from microbes or single cells, algae, for example by using a solvent, such as supercritical carbon dioxide, hexane or isopropanol. The PUFA may be in triglyceride and/or phospholipid form (predominantly).

The PUFA may be added (such as injected) as an oil or an oil-in-water emulsion. If an oil is used, then the amount of ARA in the oil may vary from 30 to 50%, such as from 35 to 40 or 45%. This oil may be used to make the oil-in-water emulsion.

The time at which injection takes place is not critical. While injection either during the first 24 hours (day zero) or on day 18 (as proposed for vaccines), in the present case the Applicant did not find any significant influence on timing. This gives the produces the flexibility to perform injection at a convenient time, since it is not critical for injection to take place within the first day or so following laying.

### TYPES OF EGGS

The eggs (or shells) can be of any natural colour, such as white, off-white (such as cream coloured), grey or brown, including various shades of brown, from light to dark brown). The eggs, while normally mono-coloured, can consist of two or more colours, for example they may contain spots or other natural markings.

The eggs may be from any bird, that is to say a vertebrate of the class Aves. This may include birds from the Order *Galliformes* (domestic fowl, game birds), Gallinae (includes chickens) or *Struthioniformes* (ostriches and other flightless birds). Preferably the egg is from the family *Galli* (chickens), *Meleachridae* (turkeys), *Struthionidae* (ostriches), such as the species *Gallus domesticus, M. eleachius galla povo* or *Struthio camelis*. When referring to egg-white, unless the context requires otherwise, this includes both the outer thin egg white (which is in contact with the shell) as well as the inner thick white (which surrounds the yolk, but is itself surrounded by the outer thin egg white). Some eggs additionally contain an inner thin white, which may encapsulate the egg yolk. Most eggs will contain an air space, which is usually present at the more rounded (or bottom) end of the egg.

Each egg may be large, medium or small in size or may weigh from 30-70g, such as from 40-60g (such as eggs of the family *Galli*).

Preferred features and characteristics of one aspect of the present invention are applicable to another aspect *mutatis mutandis*.

The present invention will now be described by way of example with reference to the following Examples which are provided by way of illustration and are not intended to limit its scope.

### EXAMPLE 1

Arachidonic acid (ARA) was obtained from DSM Food Specialties, Agri Ingredients, P.O. Box 1, 2600 MA, Delft, The Netherlands, under the Trademark VEVODAR™. This is a microbial oil, with an ARA content of about 35%, obtained by culturing the fungus *Mortierella alpina*.

### INJECTION PROTOCOL

Whole eggs were checked and infertile ones removed Any contaminated or upside down eggs were removed (this step was taken in later Example 2 only, but not in Example 1). Eggs were removed that were dirty, so as to prevent bacterial contamination of the eggs during injection (in both Example 1 and 2).

The top of the air cell end of the egg was sanitised by mixing a 10% solution of household bleach (final concentration of 0.5% hypochlorite) in distilled water. Fresh bleach was used, mixed just before use. A cotton swab soaked in the diluted bleach was used to wipe the surface on the top (air cell) of the egg. (Iodine can be used instead of preferred).

The bleached solution was then left dry on the surface of the egg, which took about five minutes. The eggs were then sprayed with 70% isopropyl alcohol. Once the alcohol had dried, a small hole was punched in the top of the egg by inserting an 18 gauge 1½ inch (4.5cm) needle through a rubber stopper so that 0.6 to 1.2 cm of a needle emerged from the stopper. This was soaked in 70% isopropyl alcohol. A needle was used to make a small hole in the top of the egg where it was sanitised . This hole was then used later to insert the needle when injecting the polyunsaturated fatty acid (PUFA).

The PUFA oil (arachidonic acid oil) was injected using a 2 cc. syringe with a 20 gauge 1inch (2.5 cm) needle. A volume of 50 microlitre was injected into each egg. (A larger volume, of 100 microlitre) using the same oil, to double the dose of the ARA, or if an oil-in-water emulsion is being injected, could also be used). Each 1 cc syringe had twenty 50microlitre shots, but the last one or two shots were usually not used, to ensure that the correct amount of ARA was delivered. The syringe was discarded, and not reused.

This technique was used to inject the ARA into either the yolk (during injection one may be able feel to embryo; this is relevant only for Example 2) or into the egg white. Two separate injections, one to the yolk and one to the egg white can be employed if required. The needle in the syringe was inserted into the egg in a vertical up and down motion, rather than at an angle. The embryo is not hurt by the injection, and was found to hatch normally.

Once a group of eggs had been injected they were placed into a hatcher. The hole was not sealed.

### INJECTION OF EGGS

Eggs from broiler mother animals were injected at day zero (on the first day of incubation). Eggs (205 in total) were injected by the manual injection protocol described above with 0.1 ml of arachidonic acid containing oil, extracted from *Mortierella alpina* with an ARA content of 35%. The oil was injected into the yolk of all the eggs.

As a control, eggs were handled in the same way, in that an injection needle penetrated the yolk sac, but no material was injected. The eggs were incubated with 205 untreated (or control eggs), making a total of 410 eggs used in the experiment.

Five eggs from each of the two groups were sacrificed at the start of incubation to determine the ARA content in the yolk, shortly after injection. This was to check that ARA had been injected into the yolk and to determine the average amount of ARA in the egg yolk. On average, the control (uninjected) eggs contained 102mg arachidonic acid (ARA) per egg. By contrast, the injected eggs contained 135 mg ARA per egg. The ARA content was determined by the well-known fatty acid methyl ester (FAME) analytical method.

The eggs were then placed in a commercially available incubator for 21 days. For the control group of eggs, the percentage that hatched was 78%. For the injected group of eggs, the hatching rate was higher, at 85%. (Note that at day 18 the eggs were sorted to remove unfertilised and dead eggs. For the control group, 15% of eggs were lost and the remaining 92% hatched. For the injected group, 10% was lost and the remaining 94% hatched).

After hatching, the chicks of the two groups were housed in a floor pen. The rearing conditions (feed, climate, etc.) were the same for both groups. Health and mortality was monitored daily.

Over the period monitored, group mortality in the chicks whose eggs had been injected with ARA was lower by 0.8%. The mortality rate for chicks whose eggs that had been injected was 3.0%, while the mortality rate for those chicks whose eggs had not been injected with ARA was 3.8%.

Growth and feed conversion of the chicks was measured at day 42 by individually weighing each bird. On average, the feed conversion was 1.69 in the experimental group and 1.73 in the untreated (control) group. The improvement was mainly due to a smaller number of badly performing birds (laggards) in the untreated group.

### EXAMPLE 2

Eggs from broiler mother animals were injected at day 18 (i.e. after 18 days of incubation). Example 1 was repeated using the manual injection procedure, except that this time 0.1 ml of phospholipid product (from *Mortierella* biomass) containing arachidonic acid was employed. The ARA-containing product was injected into the egg white, but not the egg yolk. A total of 410 eggs were used, 205 being injected with ARA and 205 being used as a control.

After injection, the injected eggs contained, on average 140mg of ARA per egg. The control (uninjected) contained 105mg of ARA per egg. The eggs were placed in a commercially available incubator for 21 days. For the injected group of eggs, the percentage hatching was 82%. The hatching percentage with the control group was lower, at 80% . (Note that at day 18 the eggs were sorted to remove unfertilised and dead eggs. For the control group, 13% of the eggs were lost and the remaining 92% hatched. For the injected group, 15% was lost, and the remaining 96% hatched).

After hatching the chicks were housed as in Example 1, and the same parameters monitored. The mortality rate in the ARA/injected group was lower by 1.4% (3.8% as against 2.4% for the control group).

As in Example 1, growth and feed conversion was measured at day 42 by individually weighing the birds. The feed conversion (ratio) was improved in the experimental group, which had 1.67 whereas the ratio in the untreated (control group) was 1.74-. The improvement was due to a smaller number of badly performing birds (laggards) in the treated group.

### COMPARATIVE EXAMPLE 3

This provides some general information on the composition of eggs, and in particular their fatty acid content.

The fatty acid composition of triacylglycerol and phospholipids in egg yolk is shown in Table 1 below which is taken from Noble, 1987 (cited from Leskanich and Noble, 1997).

**Table 1**

| Fatty acid | Triacylglycerol (%) | Phospholipid (%) |
|---|---|---|
| 16:0 (palmitic) | 24.5 | 28.4 |
| 16:1 | 6.6 | 1.9 |
| 18:0 (stearic) | 6.4 | 14.9 |
| 18:1 (oleic) | 46.2 | 29.5 |
| 18:2 n-6 (linoleic) | 14.7 | 13.8 |
| 18:3 n-3 (linoleic) | 1.1 | 0.3 |
| 20:4 n-6 (ARA) | 0.3 | 6.2 |
| 22:6 n-3 (DHA) | <0.2 | 4.1 |
| Total | 100 | 99.1% |

Eggs have the following composition (Table 2 below is taken from "Lehrbuch der Lebensmittelchemie", page 368, J.Schormüller,1974, Springer-Verlag).

**Table 2**

| | Whole Egg | Shell | Egg white | Yolk |
|---|---|---|---|---|
| Weight (g) | 58 | 6 | 33 | 19 |
| Water % | 65.6 | 1.6 | 87.9 | 48.7 |
| Dry matter % | 34.4 | 98.4 | 12.1 | 51.3 |
| Protein % | 12.1 | 3.3 | 10.6 | 16.6 |
| Lipids % | 10.5 | trace | trace | 32.6 |
| Carbohydrate % | 0.9 | - | 0.9 | 1.0 |
| Minerals % | 10.9 | 95.1 | 0.6 | 1.1 |

Four batches of eggs were analysed for their ARA content. Four types of eggs were chosen, and five eggs from each batch were analysed. Various parameters were measured, and these are shown in Table 3 below. The ARA content (dry matter of yolk) is given in the final column, and this is the average of two analyses on separate samples taken from the same egg. As can be seen, the largest ARA content was 14.1 g/kg dry matter of yolk.

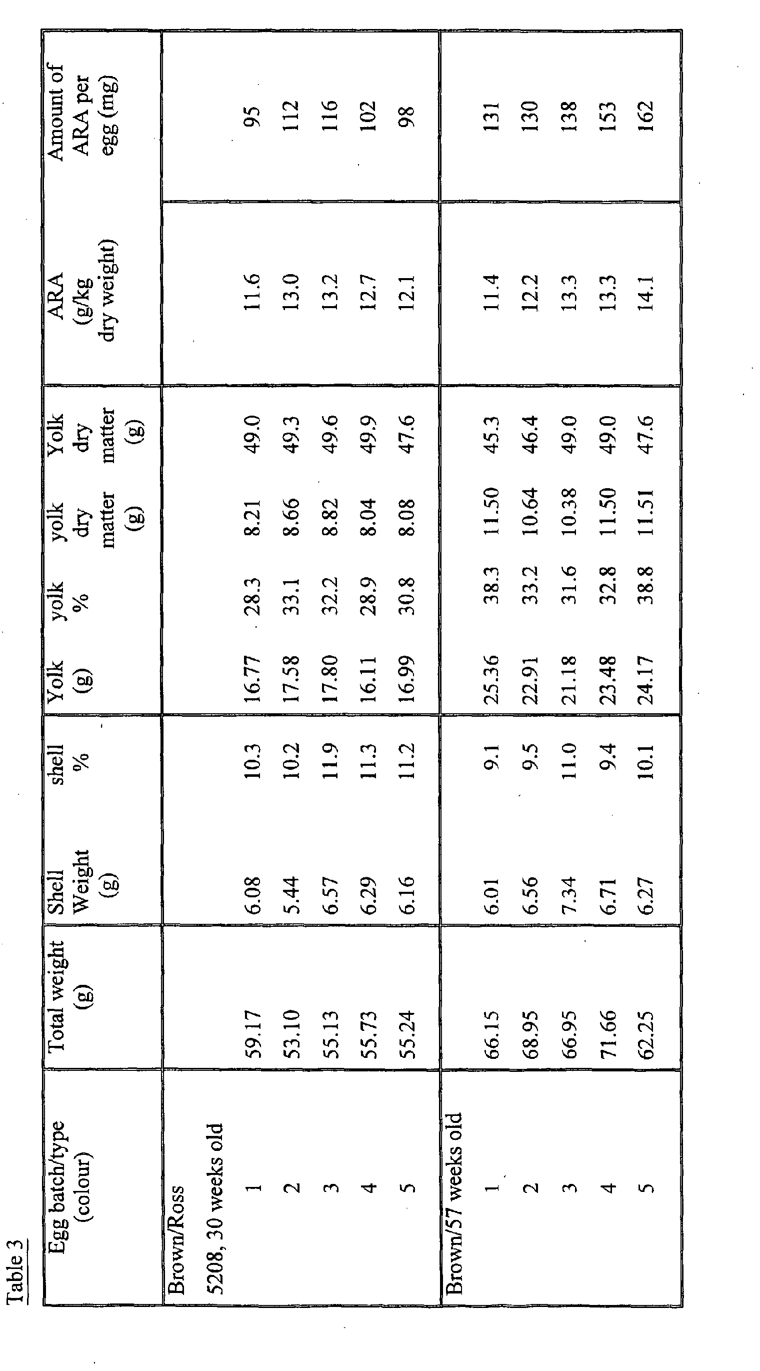

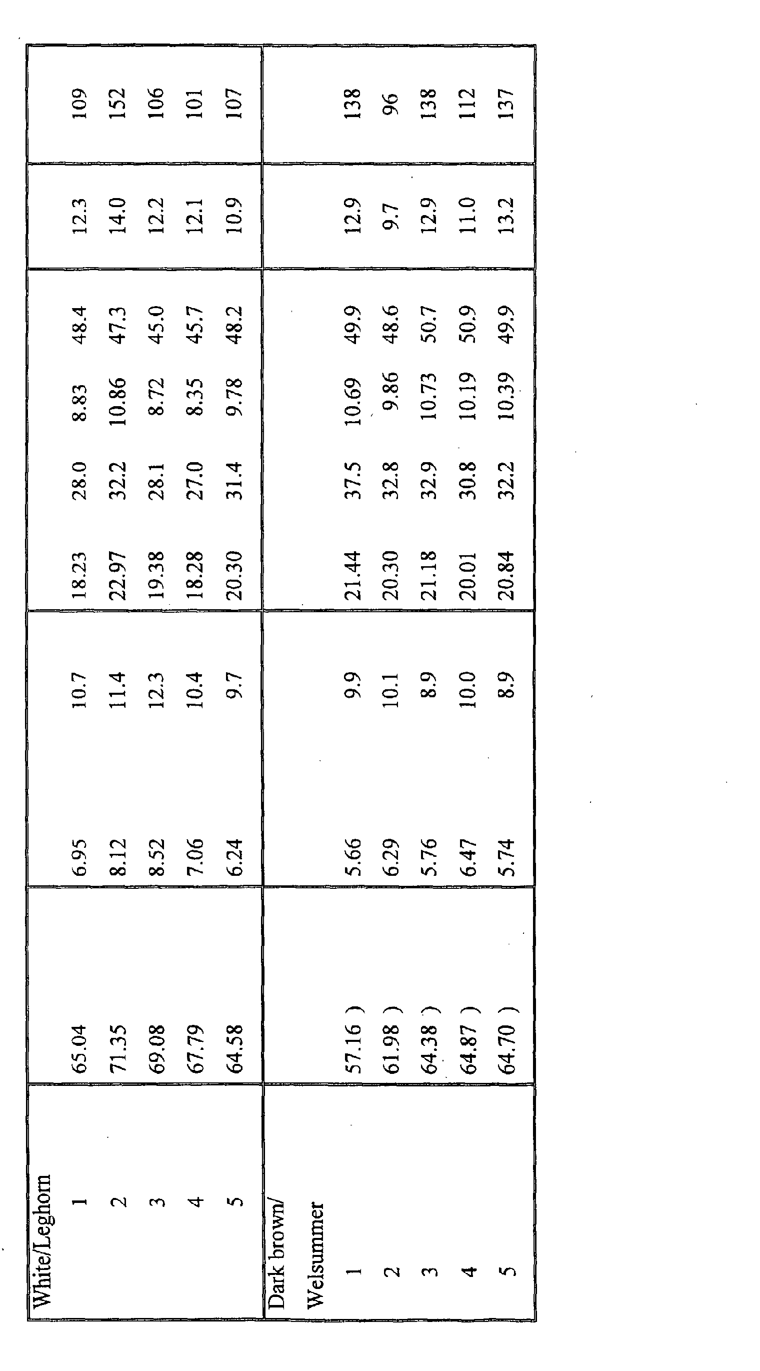

## Claims

1. A process for improving the survival rate, hatching rate, growth, feed conversion and/or immunological status of a chicken from an egg, the process comprising increasing the PUFA content of the egg.

2. A process according to claim 1 wherein the PUFA content of the egg is increased by from 0.01 to 0.1% based on the total weight of the egg.

3. A process for increasing the PUFA content of an egg, the process comprising adding a PUFA to an egg.

4. A process according to claim 3 wherein the PUFA is transported across the shell of the egg.

5. A process according to claim 3 or 4 wherein the shell or the shell surface is broken (such as by making a hole in the shell) and the PUFA transported there-through.

6. A process according to any one of claims 2 to 5 wherein the PUFA is added to the egg by injection, either manually or by a machine.

7. A process according to any of claims 3 to 6 wherein the PUFA is added to the egg within 24 hours of the egg being laid or is added no later than 30 days after the egg was laid.

8. A process according to any of claims 2 to 7 wherein the PUFA is is in the form of a triglyceride or a phospholipid, is a C18, C20 or C22 n-3 or n-6 polyunsaturated fatty acid and/or the PUFA is added to the egg white, the yolk or both.

9. An egg comprising a yolk and egg white, having one or more of the following characteristics:
(a) the yolk contains arachidonic acid (ARA) where at least 10% of the ARA is in the triglyceride form (or less than 90% of the ARA is in the phospholipid form);
(b) the egg white comprises a lipid or a PUFA, for example at least 0.01% of a lipid or a PUFA;
(c) the egg or egg yolk has had added at least 10mg of a PUFA, such as ARA;
(d) the egg or egg yolk has at least 15 g of a PUFA, such as ARA, per kg of dry matter of yolk.
(e) the egg has a PUFA content of at least 12% (based on the total weight of the egg or fatty acids in the egg);
(f) the egg or egg yolk has an ARA content of at least 2.5% (based on the total weight of lipids in either the egg or egg yolk);
(g) the egg or yolk has at least 10mg of ARA in the triglyceride form; and/or
(h) the egg has a break or hole in the shell through which a PUFA has been added to the egg.

10. An egg according to claim 9 wherein:
(i) the PUFA comprises arachidonic acid (ARA);
(j) the egg is a chicken, duck or turkey egg;
(k) the egg retains its shell (it is intact) or in unshelled, and is optionally in a raw or cooked form.
